# EUROPEAN PATENT SPECIFICATION

(11) **EP 1 846 327 B1**
(45) Date of publication and mention of the grant of the patent: **10.12.2008**
(21) Application number: 06701852.3
(22) Date of filing: 09.02.2006
(51) Int. Cl.: C01B 33/18, A01N 59/00, A01N 25/12, A01P 1/00, A01N 59/20, A01N 59/16

(54) **ANTIMICROBIAL AND ANTIFUNGAL POWDERS MADE BY FLAME SPRAY PYROLYSIS**
DURCH FLAMMENSPRÜHPYROLYSE HERGESTELLTE ANTIMIKROBIELLE UND ANTIMYKOTISCHE PULVER
POUDRES ANTIMICROBIENNES ET ANTIFONGIQUES REALISEES PAR PYROLYSE AU PISTOLET A FLAMME

(30) Priority: 11.02.2005 WO PCT/CH2005/000077
(43) Date of publication of application: 24.10.2007
(73) Proprietor: ETH Zürich, 8092 Zürich (CH)
(72) Inventor: HEIGHT, Murray, CH-8006 Zürich (CH); PRATSINIS, Sotiris, E., CH-8032 Zürich (CH)
(74) Representative: Grimm, Siegfried
(86) International application number: PCT/CH2006/000084
(87) International publication number: WO 2006/084411

(56) References cited:
- WO-A-03/070640
- US-A1- 2003 235 624
- MAEDLER L ET AL: "CONTROLLED SYNTHESIS OF NANOSTRUCTURED PARTICLES BY FLAME SPRAY PYROLYSIS" JOURNAL OF AEROSOL SCIENCE, ELMSFORD, NY, US, vol. 33, 2002, pages 369-389, XP001120383 cited in the application

## Description

### Technical Field

The present invention relates to the synthesis of antimicrobial and/or antibacterial and/or antifungal and optionally antiviral powders comprising a carrier material and a functional dopant being a metal and/or a metal oxide, in particular a powder with a silica (SiO₂) carrier, said carrier having inclusions of said functional dopant, said dopant being silver and/or silver oxide and/or copper and/or copper oxide, and said powder being made using a Flame Spray Pyrolysis (FSP) process.

### Background Art

It is known that silver metal (and silver oxide) exhibits antimicrobial and antibacterial activity yet is non-toxic to humans^{[1]}. The antibacterial activity of silver is described to be due to the presence of Ag⁺ cations which bind strongly to electron donor groups on constituent bacterial molecules containing sulphur, oxygen, or nitrogen^{[2]}. The Ag⁺ cation is also assumed to displace essential metal ions such as Ca²⁺ and Zn⁺ and to damage the bacterial cell membrane^{[3]}. The required concentration for antimicrobial activity has been found to be very low, with levels of 5 to 10 ppb in water capable of biocidal activity^{[4]}. Silver ions can also destroy fungi, however copper metal (and copper oxide) also exhibits antifungal activity^{[5]}.

Silicon dioxide particles that are doped with silver or silver oxides and their use for antibacterial applications are known from US 2003/0235624 A1 having the title "Bactericidal silicon dioxide doped with silver". Said particles are prepared by vapor-phase synthesis of silicon dioxide (chloride process) with introduction of an aqueous aerosol of dopant precursor into the flame gas.

The production method described in US 2003/0235624 A1 for pyrogenically obtaining silica doped with silver or silver oxide by flame oxidation or flame hydrolysis has three key stages, namely 1) formation of dopant aerosol, wherein prior to introduction into the flame, this aerosol is converted into a gas and salt crystal aerosol, 2) mixing the aerosol with gaseous Si-compound containing flame feed gases, and 3) feeding said mixture of aerosol and feed gases into the flame. The resulting particles lead to a finely divided white powder. Hydrochloric acid adhering to the particles must be removed in a subsequent process step at an elevated temperature.

Antimicrobial activity of Ag particles on metal oxide support particles other than silica particles and produced via a wet precipitation method is known from US 5,714,430, and an antimicrobial glass is described in US 2004/0170700.

The flame spray pyrolysis method (FSP) has been demonstrated as a versatile process technology to produce a wide variety of materials for many applications^{[6]}. Hitherto, however, said method has neither been suggested let alone used for the synthesis of silver and/or silver oxide and/or copper and/or copper oxide doped silica. Furthermore, there are no examples of FSP being used to specifically produce powders for antibacterial and/or antimicrobial and/or antifungal applications.

Therefore there is still a need for antimicrobial and/or antibacterial and/or antifungal powders and a method for the manufacture of such powders.

### Disclosure of the Invention

Hence, it is a general object of the invention to provide a method for the production of a doped silica (SiO₂) in the form of particles having antimicrobial and/or antibacterial and/or antifungal effect.

It is a further object of the present invention to provide a doped silica (SiO₂) in the form of particles and having antimicrobial and/or antibacterial and/or antifungal effect.

It is still a further object of the present invention to provide products comprising such doped silica.

Now, in order to implement these and still further objects of the invention, which will become more readily apparent as the description proceeds, the method for the production of a flame made doped silica (SiO₂) in the form of particles having antimicrobial and/or antibacterial and/or antifungal effect is a flame spray pyrolysis (FSP) process, in particular a process manifested by the features that said flame made doped silica comprises at least one functional dopant, said functional dopant consisting of at least one antimicrobial and/or antibacterial and/or antifungal acting metal and/or metal comprising compound, in particular at least one antimicrobial and/or antibacterial and/or antifungal acting metal and/or at least one antimicrobial and/or antibacterial and/or antifungal acting metal-oxide, said method comprising
(i) preparing a precursor solution comprising at least one functional dopant precursor and at least one silica precursor in an organic solvent,
(ii) spraying said precursor solution into a flame fuelled by combustion of said precursor solution itself,
(iii) collecting the particulate doped silica.

The term functional dopant as it is used in the scope of the present invention describes dopants having antimicrobial and/or antibacterial and/or antifungal effect.

Further dopants may be present, e.g. carrier dopants, wherein the term carrier dopant is used for dopants influencing the silica morphology.

The term additional dopant is used for dopants that are present for other purposes, e.g. for providing another function such as an antiviral effect.

Preferably, said functional dopant comprises metals and/or metal oxides selected from the group consisting of silver, silver oxide, copper, copper oxide and mixtures thereof. For the antimicrobial and antibacterial effect, silver and silver oxide are preferred. For antifungal activity copper and/or silver or their oxides, respectively may be used, whereby copper is preferred in this respect due to its demonstrated antifungal performance.

Preferred functional dopant precursors are highly soluble in organic solvents and are combusted without generation of harmful byproducts. Suitable functional dopant precursors include but are not limited to e.g. AgNO₃ (Silver nitrate), Cu(CH₃COCHCOCH₃)₂ (copper acetylacetonate), copper naphthenate and mixtures thereof.

The solubility of the silica precursor is less critical. A broad variety of organosilanes (or more generally silicon-containing compounds) is suitable, said organosilanes (or more generally silicon-containing compounds) having the additional advantage that the organic residue is combusted in the flame. Well suitable organosilanes include but are not limited to e.g. tetraethoxyorthosilane (TEOS, also called tetraethylorthosilicate), Hexamethyldisiloxane (HMDSO).

In the FSP method of the present invention any organic solvent providing sufficient solubility can be used, however, solvents with high combustion enthalpy are preferred. For e.g. silver nitrate suitable solubility in combination with acceptable enthalpy has been found with alcohols, in particular alcohols or mixtures of alcohols with a mean carbon content of 1 to 3 carbon atoms per hydroxy group, such as methanol, ethanol, n-propanol, 2-propanol, ethane diol, propane diol and mixtures thereof. At present 2-propanol is preferred. Alcohols with higher carbon content may be selected to achieve higher flame temperatures, providing sufficient solubility of the precursors is maintained. Precursor solutions should be limited to sub-saturation concentrations to prevent precipitation prior to delivery to the flame. In general, the total silicon and functional dopant metal concentration is around 0.3 moles per liter.

In view of a good antimicrobial and/or antibacterial and/or antifungal effect it is preferred that the functional dopant is present in an amount of at least 2.5 at% based on silicon, preferably at least 3 at%, most preferred 4 to 5 at%. Higher concentrations than 5 at% in general are not needed, however, with higher concentrations the time of protection may be further extended if need be. For specific applications also less than 2.5 at% dopant may be sufficient.

In the scope of the present invention, it has been found that silica has unexpected advantages if used as carrier material for functional dopants in the FSP production method of the present invention. Since it is non-crystalline, it forms an especially good matrix for the functional dopant. It assists in determining the particle size of the functional dopant, it provides a good porosity and it enables a good predetermination of the final particle size.

Thus, the system of the present invention can be varied in broad ranges thereby varying the ratio of the specific forms of functional dopants generated. By enhancing the silver to silicon ratio in the precursor solution while keeping the total concentration of metal + silicon and the production parameters constant, the average diameter of the silver particles and therewith the amount of longtime active functional dopant can be increased with an almost constant final particle size.

The advantageous behavior of the system of the present invention is assumed to be due to the behavior of the specific system within the flame.

Without wanting to be bound by any theory, the combination of functional dopant-silica agglomerates and silica-coated functional dopant morphologies suggests two formation pathways for the observed material. One pathway, leading to functional dopant-silica agglomerates, is consistent with gas-phase nucleation, surface-growth, and sintering for the growth of both silica and functional dopant particles followed by coagulation to form the large matrix structures. The second pathway, forming large silica-coated functional dopant particles, suggests the presence also of a droplet-reaction route with precursors reacting within the sprayed droplet^{[11]} to give large functional dopant particles followed by condensation of gas-phase silica to give a surface coating on the functional dopant particles. Alternatively the presence of the large functional dopant particles might also derive from surface mobility and sintering of functional dopant particles nucleating on the surface of the silica agglomerates.

The particles resulting from the current invention all have a brown colour, which is due to an optical interference effect (so-called plasmon resonance effect) between the silver particles of the specific small size as generated in the process according to the invention. It is noted that the particles as generated in US 2003/0235624 are explicitly stated to be white particles (see paragraph [0023]), clearly indicating that the size of the silver particles produced in a process according to US 2003/0235624 are much larger than the ones produced in the process according to the invention, as otherwise the same optical interference effect would also occur in this state-of-the-art. However, to have smaller particles leads to an unexpected increase in antimicrobial and antifungal effect of the dopant. So, the structure as-produced according to the invention is structurally different from the one as disclosed by US 2003/0235624 and the specific structure according to the invention (as well as the method) is not suggested by this state-of-the-art as no improvement based on size considerations of the particles is suggested.

Since the morphology of the silica has been found to be of great importance to the features of the final product said features may be influenced by adding one or more carrier dopants that influence the morphology of the silica. Suitable carrier dopants are e.g. oxides of metals selected from the group consisting of titanium, zinc, aluminium and mixtures thereof. Such dopants will in general be present in amounts of at most 10 at% dopant metal based on Si, preferably in amounts of at most 5 at%, most preferred in amounts of at most about 2 at%.

Carrier dopant precursor compounds - if used - are also added to the precursor solution. Suitable carrier dopant precursors are also organometallic compounds including but not limited to zinc acetylacetonate, titanium isopropoxide, and aluminium acetylacetonate.

In general, a flame made doped silica in the form of particles of the present invention is characterized by a functional dopant that is simultaneously present in form of embedded particles, surface exposed particles and large silica-coated particles. Such a doped silica is obtainable by a method of the present invention.

The doped silica in form of particles of the present invention comprises dopants as described above.

The observed combination of embedded, surface exposed and large silica-coated functional dopant particles is quite desirable for antimicrobial and/or antibacterial and/or antifungal applications. Antimicrobial and/or antibacterial and/or antifungal activity is derived from the delivery of functional dopant ions to bacteria and so the presence of surface exposed functional dopant in these powders allows ready availability of functional dopant ions and therefore high initial antimicrobial and/or antibacterial and/or antifungal activity. However, the presence of embedded functional dopant particles acts as a reservoir of functional dopant for long-term performance with functional dopant ions diffusing to the outside of the agglomerates to maintain activity of the powder over extended times. Furthermore, the presence of large silica-coated functional dopant particles also augments this reservoir effect. While the presence of the large functional dopant-particles is of benefit for antimicrobial and/or antibacterial and/or antifungal activity, a powder with a higher proportion of functional dopant-silica agglomerate structures may be more desirable for applications requiring transparency or minimal powder color.

At present, a preferred dopant is silver in predominantly or exclusively metallic form. However, if predominantly or exclusively antifungal activity is desired, copper and/or copper oxide may be preferred.

For specific applications, the surface of the doped silica particles may be functionalized with organic groups for selective fixation to specific surfaces or within polymer matrices.

Such functionalization can be made using generally known methods/substances, e.g. methods/substances known from primer technology. Suitable are e.g. bifunctional molecules with one functional group having a high affinity or reactivity towards the silica carrier and one group having a high affinity or reactivity towards the material wherein the flame made doped silica shall be incorporated or that is intended to be treated or impregnated with the doped silica. Such material is also referred to as "material to be doped". Examples for silica liking groups are silane compounds which can undergo silylation reactions with surface hydroxyl groups and groups having an affinity to the material to be doped can be tuned for hydrophobic or hydrophilic functionality. Other reactions capable of grafting to the silica surface include esterification and amidization.

FSP is a process capable of synthesizing the flame made doped silica powders of the present invention in large quantity and at low cost. These powders can be incorporated in many applications to provide clean and sterile functionality to numerous goods.

The doped silica of the present invention can e.g. be used as filler for polymers and/or polymer composites. If homogeneously mixed, it can in addition perform the function of mere silica fillers. In such applications high amounts can be added, in general up to 50 wt% based on the polymer/polymer composite. Such polymers/polymer composites can then be used to produce respectively doped woven and/or nonwoven textiles.

It is also possible to use the doped silica of the present invention in combination with goods such as polymers and/or polymer composites and/or natural fibers and/or woven and/or nonwoven textiles, e.g. by at least partially, preferably fully, treating or impregnating such goods.

Doped materials or treated/impregnated materials of the present invention can not only be used for producing textiles but also for the production of e.g. food and/or beverage containers, for tooth brushes, other consumer products, and medical equipment.

Since it is possible to vary the ratio of the specific forms of functional dopant by varying the production parameters and/or the dopant/carrier ratio, it is also within the scope of the present invention to use mixtures of differently produced doped powders. This enables to produce a broad spectrum of behavior over time with a minimal number of different production processes needed.

### Brief Description of the Drawings

The invention will be better understood and objects other than those set forth above will become apparent when consideration is given to the following detailed description thereof. Such description makes reference to the annexed drawings, wherein:
Figure 1 is a schematic diagram of a suitable flame spray pyrolysis apparatus as used in the scope of the examples.
Figure 2 shows X-ray diffraction (XRD) patterns for silver-doped silica for Ag concentrations between 0 and 5 atom%.
Figure 3 shows the results of particle size measurements using two different methods, wherein the BET equivalent diameter evaluated from specific surface area data is shown by the open circles and corresponds to the estimated diameter of the primary particles (SiO₂ and Ag) within the as-produced powder, and wherein the solid diamonds correspond to diameters estimated from the XRD patterns using the fundamental parameter approach.
Figure 4 shows transmission electron microscope (TEM) images for 5 at.% Ag doped SiO₂, wherein the left hand image **a** shows metallic silver particles (dark gray, indicated also by arrows) within an agglomerate matrix of amorphous silica (light gray particles) and wherein right hand image **b** shows that a range of silver particle sizes may be present in the sample including some large silica-coated particles.
Figure 5 shows on the left a scanning transmission electron microscope (STEM) image of a silver-doped silica matrix, wherein the bright spots are metallic silver particles, and on the right graphs representing the EDXS elemental analysis of points indicated in the STEM image.
Figure 6 shows photographs of *Escherichia coli* growth on agar plates containing 1 mg/ml of silver-silica powder of various silver concentrations after 24 hours growth time and a graph showing the percentage area coverage on each agar plate as a function of silver doping in the Ag-SiO₂ powders.
Figure 7 shows the fungus growth inhibition effects for silica, Ag-silica and Cu-silica powders against A) *Serpula lacrimans* and B) *Ustulina deusta*.

### Modes for Carrying out the Invention

The present invention is now further described for a method starting from a binary precursor system and the respectively produced products.

The FSP method for producing a flame made doped silica (SiO₂) in the form of particles having antimicrobial and/or antibacterial and/or antifungal effect, wherein said particles comprise at least one functional dopant consisting of at least one antimicrobial and/or antibacterial and/or antifungal acting metal and/or metal comprising compound, comprises the steps of
(i) preparing a precursor solution comprising a functional dopant precursor and a silica precursor in an organic solvent,
(ii) spraying said precursor solution into a flame fuelled by combustion of said precursor solution itself,
(iii) collecting the particulate doped silica.

In a much preferred embodiment, the functional dopant consists of at least one antimicrobial and/or antibacterial and/or antifungal acting metal and/or at least one antimicrobial and/or antibacterial and/or antifungal acting metal-oxide.

Surprisingly it was found that by using the method of the present invention not predominantly the expected dopant metal oxides are formed but pure metal particles, in particular in the case of silver as functional dopant.

Starting from a precursor solution comprising AgNO₃, tetraethoxyorthosilane and iso-propanol as solvent particles of (within the detection limits) pure metallic silver were obtained.

The total (Si+Ag) concentration for each precursor solution should be in the range of 0.1 to 0.5 mol/L and preferably about 0.3 mol/L. The liquid precursors may be exposed to ultrasonication for a time and with a power suitable to aid in dissolution of the AgNO₃ solids. All sample preparation and FSP synthesis steps may be performed in low light conditions together with suitable light shielding devices to avoid alteration of light sensitive precursors.

As-produced powders showed at least one, preferably at least the first 3, much preferred all of the following characteristics:
- simultaneous presence of embedded and surface exposed functional dopant, in particular silver particles,
- matrix of amorphous silica,
- embedded and surface exposed functional dopant particles, in particular silver particles, in general with a diameter <20 nm,
- large silica-coated particles in general with diameters >50nm,
- antibacterial and antimicrobial effect up to at least 3 days, preferably at least 5 days, much preferred at least about 7 days, if measured by dispersing 1 mg/ml of the doped silica within a liquid culture of *Escherichia coli.* (The antimicrobial and/or antibacterial effect can be and was measured by a test, wherein the initial concentration of bacteria was a colony of approximately 1000 bacteria (*E*. *Coli*) dispersed in 5 ml of culture medium, and 1mg of each powder was placed in 1ml of this bacteria culture. In this test, an effective powder in general leads to the death of the bacteria with associated decrease in visual turbidity and a conservation of the culture medium in this state for the above mentioned time.)

By using other precursors and/or other dopants such as copper and/or other solvents and/or other concentrations and/or other feeding rates, the particle size and/or the particle type (embedded, surface exposed, silica coated) and/or the metal to metal oxide ratio of the functional dopant may be varied.

### Examples

### Example 1: Production of silver doped silica particles

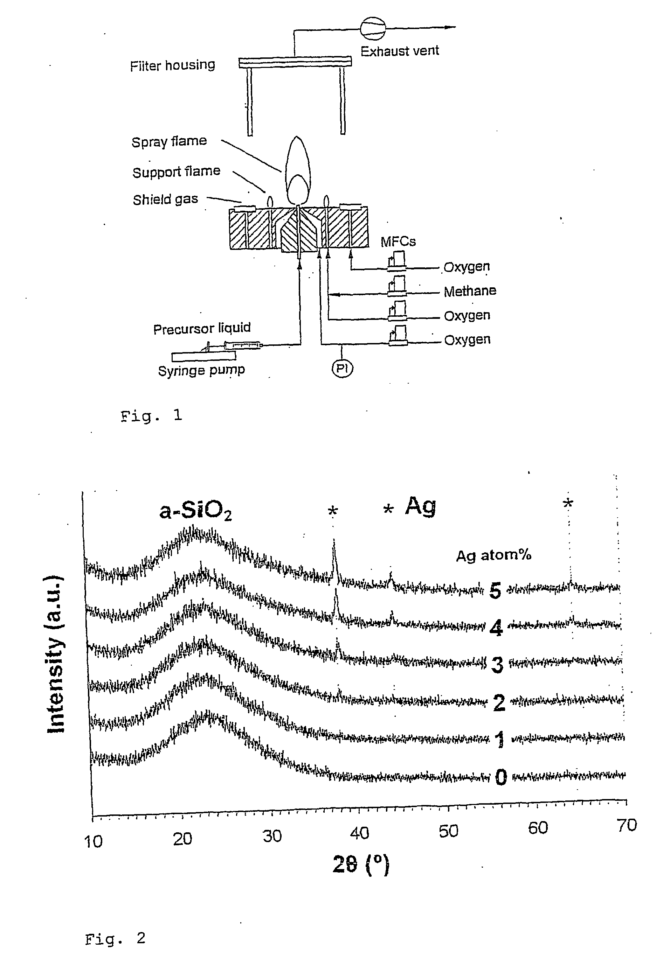

Silver doped silica particles were produced by flame spray pyrolysis using a flame spray pyrolysis (FSP) nozzle^{[7]} that had a radially symmetric configuration with a stainless-steel capillary tube (ID 0.41 mm; OD 0.71 mm) at the central axis serving as the liquid feed nozzle (see Figure 1). Immediately surrounding the capillary tube was a narrow annular gap of adjustable cross-sectional area, that issued 5 L/min of oxygen for spray atomization of the liquid feed. The pressure drop across the nozzle was maintained at 1.5 bar during FSP operation. A narrow concentric orifice ring (0.15 mm spacing, 6 mm radius from nozzle axis) was supplied with a mixture of CH₄ (1.5 L/min) and O₂ (3.2 L/min) to serve as a premixed pilot flame for ignition and support of the spray flame. A sheath gas flow of 5 L/min of oxygen was issued through an annular sintered metal frit (8 mm width, inner radius 9 mm from the nozzle axis) to stabilize and contain the spray flame. The precursor liquid feed was supplied at 5 ml/min using a rate-controlled syringe pump (Inotech R232) and all gas flows (Pan Gas, >99.95%) were metered using mass flow controllers (Bronkhorst). A water-cooled, stainless-steel filter housing supported a glassfiber sheet (Whatman GF/D; 25.7 cm diameter) for collection of the flame-produced powder with the aid of a vacuum pump (BUSCH).

The basis liquid precursor solution was composed of 2-propanol (Aldrich, 99.9%), tetraethoxyorthosilane (TEOS, Aldrich, >98%), and silver nitrate (AgNO₃, Fluka, >99%). Silver concentrations ranged between 0 and 5 atom percent (at.%) in proportion to silicon. The total (Si+Ag) concentration for each precursor solution was 0.3 mol/L. The liquid precursors were exposed to ultrasonication (Sonics Vibra-Cell) for 3 minutes at 75% probe power with 1.0s/0.5s on/off configuration to aid in dissolution of the AgNO₃ solids. No solution alteration or precipitation was observed from the sonication step. All sample preparation and FSP synthesis steps were performed in low light conditions together with suitable light shielding devices to avoid alteration of light sensitive precursors.

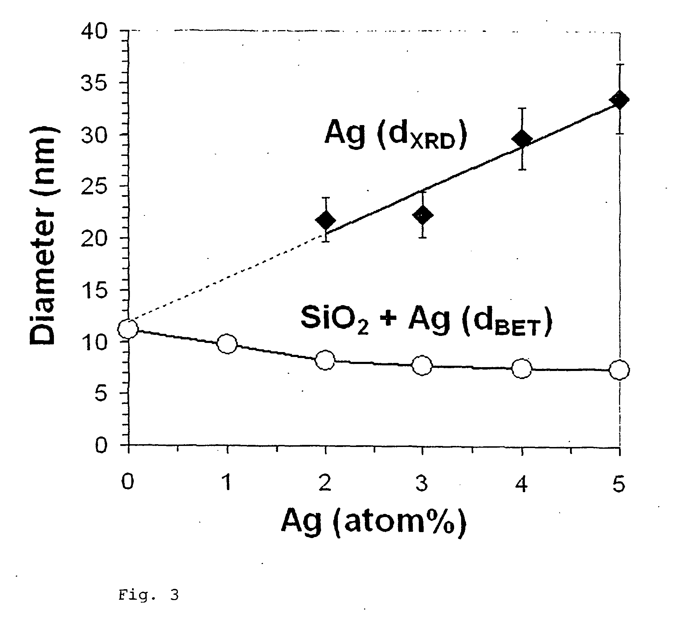

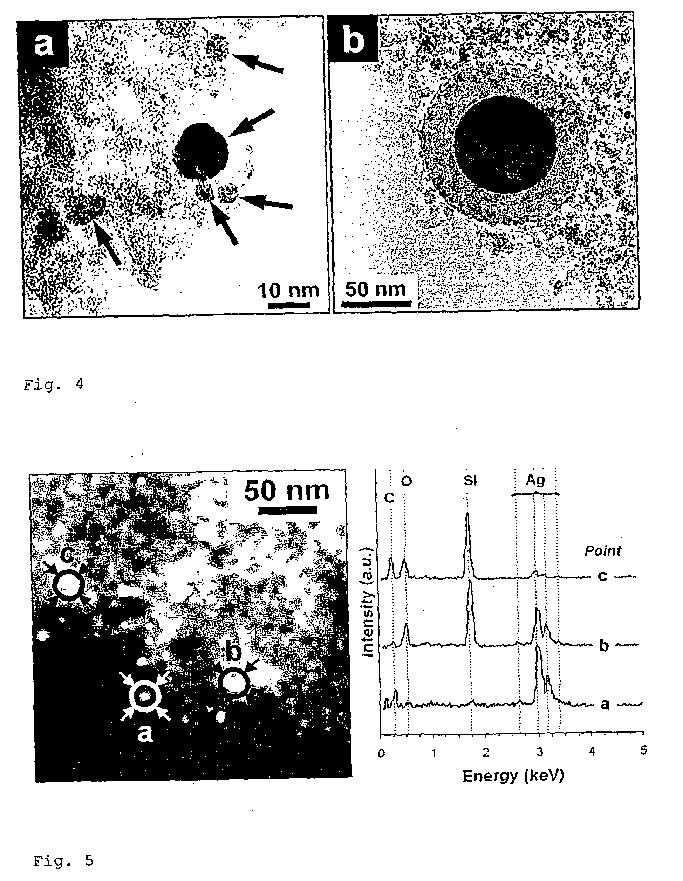

As-produced powders were characterized using
(i) powder X-ray diffraction (XRD) (Example 2; Fig. 2; estimated silver particle diameter Example 3; Fig. 3),
(ii) BET adsorption isotherms and specific surface area (SSA) analysis (Example 3; Fig. 3),
(iii) high resolution electron microscopy (HRTEM) (Example 4; Fig. 4),
(iv) scanning transmission electron microscopy (STEM) (Example 5; Fig. 5), and
(v) energy dispersive x-ray spectroscopy (EDXS) analysis (Example 6; Fig. 5).

### Example 2: Powder X-ray diffraction

The powder X-ray diffraction (XRD) was performed with a Bruker AXS D8 Advance spectrometer at 2θ (Cu-Kα) 10 to 70°, a step size of 0.03°, and a scan speed of 0.6 °/min (source 40 kV, 40 mA). XRD patterns were analyzed using the Fundamental Parameter (FP) method to match the profile of individual peaks within each XRD pattern, allowing extraction of crystallite size information^{[8]}. The XRD patterns for Ag-doped silica for silver concentrations between 0 and 5 at.% are shown in Figure 2. The presence of amorphous silica (a-SiO₂) in the sample is clearly reflected in the broad peak appearing in the baseline between 15 and 35°. Peaks corresponding to metallic silver are indicated with asterixes at 38.1, 44.3 and 64.5°. These peaks correspond to the (111), (200) and (220) silver crystal planes respectively. The indicated peaks are consistent with reference pattern PDF 87-0717^{[9]} and no peaks were observed for silver oxides.

The silver XRD peaks, and most noticeably the peak at 38.1°, increased in size as the Ag concentration was increased, consistent with increasing particle size. The silver peaks were largely indistinguishable for dopant concentrations below 3 at% indicating that silver crystals were only present at the higher concentrations with only small (or atomic clusters) present at lower dopant concentrations.

### Example 3: Particle size determination

BET adsorption isotherms and specific surface area analysis were performed using a MicroMeritics TriStar 3000 system after degassing in nitrogen for 1.5 hours at 150°C. The specific surface area (SSA) was measured using 5-point nitrogen adsorption at 77 K. The BET equivalent diameter was evaluated from the measured SSA for each sample, assuming a spherical primary particle geometry and a composition-corrected density. The such obtained BET equivalent diameter (d_{BET}) was compared with the diameters estimated from the XRD patterns using the fundamental parameter approach.

The results obtained with said two methods of particle size analysis as a function of silver concentration are shown in Figure 3. The open circles show the BET equivalent diameter (d_{BET}) of the as-produced powder where the diameter was evaluated based on the measured specific surface area of the silver-doped silica powder. This BET equivalent diameter was observed to decrease from 11 nm for no silver dopant to 8 nm at 3 at.% Ag and then to remain at 8 nm for concentrations up to 5 at.% Ag. The observed decrease of the d_{BET} was consistent with the observations of Tani and coworkers^{[10]} who found that the addition of even low dopant concentrations can induce a marked reduction of the silica primary particle size and largely attributed this influence to the influence of dopants on the silica sintering properties.

The solid diamonds in Figure 3 represent the diameter (D_{XRD}) of the silver crystallites as evaluated using the fundamental parameter method^{[8]} on the 38.1° silver peak from the XRD patterns. Estimates for the diameter of the silver crystallites were obtained only for dopant concentrations between 2 and 5 at.% with the Ag size increasing from 22 to 34 nm over this range. These crystallite sizes were larger than the BET estimate for silica primary particle size suggesting that the silver crystallites were surrounded by an agglomerate matrix of the more numerous silica particles.

### Example 4: Transmission electron microscope (TEM) images

Transmission electron microscope (TEM) images of the silver-doped silica powder (5 at.% Ag) are shown in Figure 4. The left hand image marked a shows a typical morphology observed for the silver-doped silica powder. The material consisted of metallic silver particles with a range of observed sizes embedded within a matrix of amorphous silica. The silver particles were found to be randomly dispersed within the silica matrix with most particles surrounded by silica, however some silver particles appeared at the edge of the silica agglomerate indicating that they were exposed at the surface.

Right hand image marked **b** shows a view of the as-produced powder that features a large (>50 nm) silver particle coated in a silica shell with a thickness of approximately 20 nm. This large feature is shown in close association with a silver-silica agglomerate similar to that observed in image **a**. This combination of silver-silica agglomerates and silica-coated silver morphologies, i.e. the simultaneous presence of embedded, surface exposed and large silica-coated silver particles, is desirable and suggests two formation pathways (see above).

### Example 5: Scanning transmission electron microscope (STEM) image

Figure 5 shows a representative scanning transmission electron microscope (STEM) image of silver-doped silica powder (5 at.% Ag). The STEM image once again illustrates the morphology of silver particles embedded within the amorphous silica matrix in agreement with the TEM images shown in Figure 4. The silver particles in the STEM image appear with much higher contrast compared to TEM, however with the bright features in the image being the metallic silver particles. The diffuse light gray areas of the image are indicative of the amorphous silica surrounding the silver particles.

### Example 6: Energy dispersive x-ray spectroscopy (EDXS) analysis

Energy dispersive x-ray spectroscopy (EDXS) analysis of specific spots was carried out with a Phillips CM30ST microscope (LaB₆ cathode, 300 kV). Said specific spots were points a, b and c indicated within the STEM image. The spectra associated with each point are given in the inset graph in Figure 5. Point a is dominated by silver (signal at ca. 3 keV) consistent with a surface exposed particle. Points b and c show silver together with silica (signal at ca. 1.7 keV) and oxygen (signal at ca. 0.5 keV) indicating that these silver particles are embedded within the silica matrix. The high signal for silver, together with the absence of oxygen in the EDXS signal for point a, indicates the formation of metallic silver rather than oxides, which is also in agreement with the XRD analysis.

### Example 7: Antibacterial Performance

### A: Liquid Culture

In an initial qualitative test 1 mg/ml of each powder (0 to 5 at.% Ag) was dispersed within the complex medium TSB (Biolife, Milano, Italy) in triplicates. Each testing tube was inoculated with approximately 1000 colony forming units of *Escherichia coli* K12 MG1655, and the turbidity was visually monitored as an indicator of bacterial growth, with high turbidity indicating the presence of bacteria. The antibacterial performance of the powders within the liquid cultures revealed that after 24 hours at 37°C the 0, 1 and 2 at.% Ag samples had insufficient strength to inhibit the growth of the bacteria colonies. The 3 at.% Ag sample inhibited growth in the initial 24 hours followed by a slow increase in turbidity, indicative of increasing bacteria population. Samples with 4 and 5 at.% Ag completely prevented the further growth of the bacterial population.

### B: Agar Plate Tests

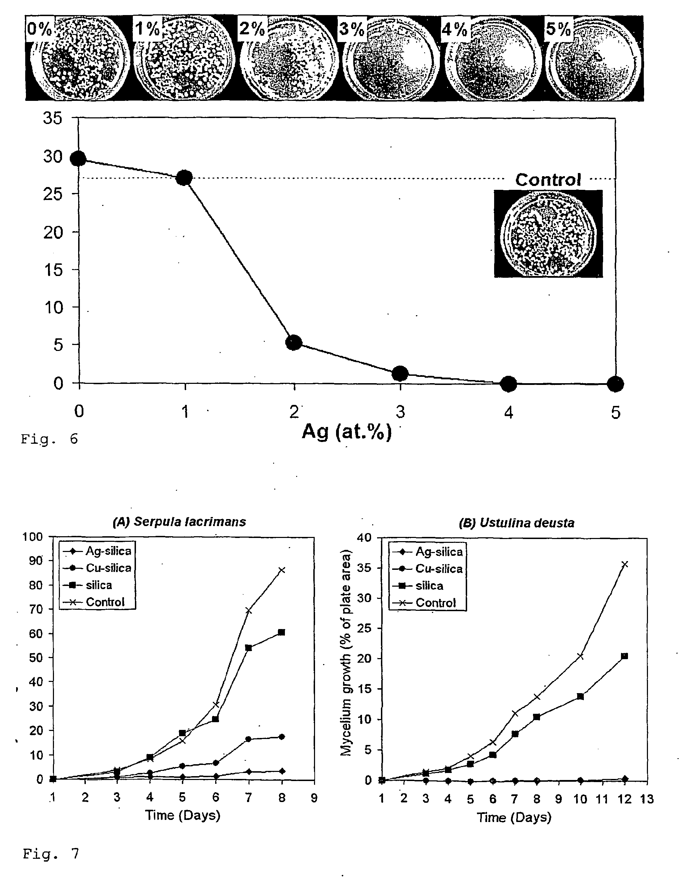

Additional qualitative tests were performed by homogenously dispersing each powder (0 to 5 at.% Ag) within TSA (Biolife, Milano, Italy) test plates (1 mg/ml agar). Each test was done in triplicates. Each plate was streaked with approximately 1000 cells and incubated for 24 hours at 37°C. After this period of incubation, colonies grown on plates were enumerated giving the impact on the growth of *Escherichia coli* at different silver loading concentrations. Figure 6 shows the agar culture test plates after a period of 24 hours exposure to the dispersed powders. The control plate, with no powder added to the agar, is dominated by colonies of *Escherichia coli.* The plate containing pure SiO₂ powder (0% Ag) is also covered by colonies of *Escherichia coli* to a similar extent to the control, indicating that the absence of silver leads to no noticeable effect on the growth of the bacteria. The plates with 1% silver concentration shows little difference to the pure SiO₂ while the 2% plate shows a decrease in the coverage of the bacteria. The 3% silver plate shows a small number of *Escherichia coli* colonies while plates for 4 and 5% silver powder show an absence of bacteria colonies.

While qualitative in nature, both the liquid culture and the agar tests described above both confirm that the antibacterial effectiveness increases as the silver concentration increases with powders containing greater than 3 at.% silver giving the best antibacterial performance against *Escherichia coli.*

Thus, the observed combination of embedded, surface exposed and large silica-coated silver particles is quite desirable for antimicrobial applications. Antimicrobial activity is assumed to be derived from the delivery of silver ions to bacteria and so the presence of surface exposed silver in these powders allows ready availability of silver ions and therefore high initial antimicrobial activity. However, the presence of embedded silver particles acts as a reservoir of silver for long-term performance with silver ions diffusing to the outside of the agglomerates to maintain activity of the powder over extended times. Furthermore, the presence of large silica-coated silver particles also augments this reservoir effect. While the presence of the large silver-particles is of benefit for antimicrobial activity, for other applications a powder with a higher proportion of silver-silica agglomerate structures may be more desirable, e.g. for applications requiring transparency or minimal powder color.

### Example 8: Antifungal performance

The antifungal efficacy of pure SiO₂, 5at.% Ag SiO₂ and 5at. % Cu SiO₂ powders was assessed using a simple agar plate test. The fungi species *Serpula lacrimans* and *Ustulina deusta* were cultivated separately on malt extract agar (MEA) plates. Growing media test plates were prepared containing 4% MEA and the powder sample in question homogenously mixed throughout the agar. A powder concentration of 10 mg powder in 1 cm³ of MEA was used. A pure MEA test plate was used as a control. Each 8 cm diameter agar test plate contained 6 cm³ of growth medium. For each test-plate, a small (approx. 4 mm diameter) sample of the test-fungi colony was placed on the surface of the prepared growth medium. After inoculation the agar plates were stored in a climatic exposure test cabinet at 20°C. The mycelium growth across the growing media was measured in two directions and the populated area was calculated. Measurements were performed periodically until the mycelium reached the border of the plate. Two repetitions were performed for each fungus medium. The growth inhibition effects of the different powders are shown in Figure 7.

Silver-silica and copper-silica powders were found to inhibit the growth of both *Serpula lacrimans* and *Ustulina deusta*. Silica had a slight inhibitory effect but the fungi growth was not significantly reduced compared to the MEA control. Silver-silica powder was more effective against *Serpula lacrimans* than copper-silica. Both silver-silica and copper-silica powders were effective against *Ustulina deusta* with copper-silica exhibiting a slightly stronger effect than silver-silica.

Thus, also with regard to the antifungal activity the powders obtainable by the present invention, due to the specific form of the doping metals present, show desirable antifungal activity. As the antimicrobial activity, also the antifungal activity is assumed to be derived from the delivery of dopant ions to fungi and so the presence of finely divided dopant powders allows ready availability of dopant ions and therefore high initial antimicrobial activity. However, dopant particles that are less readily available can act as a reservoir of dopant for long-term performance with dopant ions diffusing to the outside of the agglomerates to maintain activity of the powder over extended times.

### Cited Non-Patent Literature

[1]S. Y. Yeo, H. J. Lee, S. H. Jeong, Journal of Materials Science 2003, 38, 2143.
[2]D. P. Dowling, K. Donnelly, M. L. McConnell, R. Eloy, M. N. Arnaud, Thin Solid Films 2001, 398-399, 602.
[3] I. Sondi, B. Salopek-Sondi, Journal of Colloid and Interface Science 2004, 275, 177.
[4]T. Gilchrist, D. M. Healy, C. Drake, Biomaterials 1991, 12, 76.
[5]V. I. Ivanov-Omskii, L. K. Panina, S. G. Yastrebov, Carbon 2000, 38, 495.
[6]L. Mädler, H. K. Kammler, R. Mueller, S. E. Pratsinis, Journal of Aerosol Science 2002, 33, 369.
[7]L. Mädler, W. J. Stark, S. E. Pratsinis, Journal of Materials Research 2003, 18, 115.
[8] R. W. Cheary, A. Coelho, Journal of Applied Crystallography 1992, 25, 109.
[9]E. A. Owen, G. I. Williams, Journal of Scientific Instruments 1954, 31, 49.
[10] T. Tani, L. Madler, S. E. Pratsinis, Journal of Materials Science 2002, 37, 4627.
[11] L. Madler, W. J. Stark, S. E. Pratsinis, Journal of Materials Research 2002, 17, 1356.

## Claims

1. A flame spray pyrolysis method for producing a flame made doped silica(SiO₂) in the form of particles having antimicrobial and/or antibacterial and/or antifungal effect, wherein said flame made doped silica comprises at least one functional dopant, said functional dopant consisting of at least one antimicrobial and/or antibacterial and/or antifungal acting metal and/or metal comprising compound, said method comprising
(i) preparing a precursor solution comprising at least one functional dopant precursor and at least one silica precursor in an organic solvent,
(ii) spraying said precursor solution into a flame fuelled by combustion of said precursor solution itself,
(iii) collecting the particulate doped silica.

2. The method of claim 1 wherein said functional dopant consists of at least one antimicrobial and/or antibacterial and/or antifungal acting metal and/or at least one antimicrobial and/or antibacterial and/or antifungal acting metal-oxide.

3. The method of claim 1 or 2, wherein at least one, preferably all functional dopant precursors are selected from AgNO₃ (Silver nitrate), Cu(CH₃COCHCOCH₃)₂ (copper acetylacetonate), copper naphthenate and mixtures thereof.

4. The method of anyone of the preceding claims wherein the silica precursor is a silicon-containing compound.

5. The method of anyone of the preceding claims wherein the organic solvent is an alcohol or a mixture of alcohols.

6. The method of anyone of the preceding claims wherein the functional dopant is present in an amount of at least 2.5 at% based on silicon.

7. The method of anyone of the preceding claims wherein the dopant comprises carrier dopants that influence the morphology of the silica.

8. A doped silica in the form of particles obtainable by the method of anyone of the preceding claims.

9. A doped silica in the form of particles, said silica being doped with at least one functional dopant that is selected from one or more antimicrobial and/or antibacterial and/or antifungal acting metals and/or metal oxides, said functional dopant being simultaneously present in form of embedded particles and surface exposed particles and large silica-coated particles.

10. The doped silica of claim 9, wherein said functional dopant is selected from the group consisting of silver, silver oxide, copper, copper oxide and mixtures thereof.

11. The doped silica of claim 10, wherein said functional dopant comprises silver and/or silver oxide.

12. The,doped silica of claim 10, wherein said dopant comprises copper and/or copper oxide.

13. The doped silica of anyone of claims 8 to 12, wherein the functional dopant is present in an amount of at least 2.5 at% based on silicon.

14. The doped silica of anyone of claims 8 to 13, wherein the dopant comprises carrier dopants that influence the morphology of the silica.

15. The doped silica of anyone of claims 8 to 14, wherein the carrier dopant is present in amounts of at most 10 at% dopant metal based on Si.

16. The doped silica of anyone of claims 8 to 15, wherein the particle surface is functionalized with organic groups for selective fixation to surfaces or within polymer matrices.

17. Polymers and/or polymer composites comprising at least one doped silica of anyone of claims 8 to 16.

18. Polymers and/or polymer composites and/or natural fibers at least partially treated or impregnated with at least one doped silica of anyone of claims 8 to 16.

19. Woven and/or non-woven textiles comprising polymers and/or polymer composites and/or natural fibers of claim 17 or 18.

20. Woven and/or nonwoven textiles at least partially treated or impregnated with at least one doped silica of anyone of claims 8 to 16.

## Patentansprüche

1. Ein Flammen-Sprüh-Pyrolyseverfahren zur Produktion von flammensynthetisiertem dotiertem Silikat (SiO₂) in der Form von Partikeln, das einen antimikrobielle und/oder antibakterielle und/oder antifungielle Effekt hat, wobei besagtes flammensynthetisiertes dotiertes Silikat zumindest ein funktionelles Dotiermittel umfasst, besagtes funktionelles Dotiermittel besteht aus mindestens einem antimikrobiell und/oder antibakteriell und/oder antifungiell wirkendem Metall und/oder einer Metall umfassenden Verbindung, das Verfahren umfassend
(i) Herstellen einer Precursorlösung, die zumindest einen funktionellen Dotiermittelprecursor und zumindest einen Silikatprecursor in einem organischen Lösungsmittel umfasst,
(ii) Sprühen dieser Precursorlösung in eine Flamme, die durch die Verbrennung der Precursorlösung selbst angeheizt wird,
(iii) Sammeln des partikulären dotierten Silikat.

2. Das Verfahren von Anspruch 1, worin das funktionelle Dotiermittel aus zumindest einem antimikrobiell und/oder antibakteriell und/oder antifungiell wirkendem Metall besteht und/oder zumindest einem antimikrobiell und/oder antibakteriell und/oder antifungiell wirkendem Metalloxid.

3. Das Verfahren von Anspruch 1 oder 2, worin zumindest ein, vorzugsweise alle funktionellen Dotiermittelprecursor ausgewählt sind aus AgNO₃ (Silbernitrat), Cu(CH₃COCHCOCH₃)₂ (Kupferacetylacetonat), Kupfernaphthenat und Mischungen davon.

4. Das Verfahren nach irgendeinem der vorhergehenden Ansprüche, worin der Silikatprecursor eine Silikon enthaltende Verbindung ist.

5. Das Verfahren nach irgendeinem der vorhergehenden Ansprüche, worin das organische Lösungsmittel ein Alkohol oder eine Mischung von Alkoholen ist.

6. Die Methode nach irgendeinem der vorhergehenden Ansprüche, worin das funktionelle Dotiermittel in einer Menge von mindestens 2,5 at % basierend auf Silikon vorhanden ist.

7. Das Verfahren nach irgendeinem der vorhergehenden Ansprüche, worin das Dotiermittel Trägerdotiermittel umfasst, die die Morphologie des Silikats beeinflussen.

8. Ein dotiertes Silikat in der Form von Partikeln, erhältlich durch das Verfahren nach irgendeinem der vorhergehenden Ansprüche.

9. Ein dotiertes Silikat in der Form von Partikeln, worin das Silikat mit zumindest einem funktionellen Dotiermittel dotiert ist, welches ausgewählt ist aus einem oder mehr antimikrobiell und/oder antibakteriell und/oder antifungiell wirkendem Metall und/oder Metalloxiden, das funktionelle Dotiermittel ist gleichzeitig vorhanden in der Form von eingelassenen Partikeln und oberflächenexponierten Partikeln und grossen silikatbeschichteten Partikeln.

10. Das dotierte Silikat von Anspruch 9, worin das funktionelle Dotiermittel ausgesucht ist aus der Gruppe bestehend aus Silber, Silberoxid, Kupfer, Kupferoxid und Mischungen davon.

11. Das dotierte Silikat von Anspruch 10, worin das funktionelle Dotiermittel Silber und/oder Silberoxid umfasst.

12. Ein dotiertes Silikat von Anspruch 10, worin das Dotiermittel Kupfer und/oder Kupferoxid umfasst.

13. Das dotierte Silikat von irgendeinem der Ansprüche 8-12, worin das funktionelle Dotiermittel in einer Menge von mind. 2,5 at% basierend auf Silikon vorhanden ist.

14. Das dotierte Silikat von irgendeinem der Ansprüche 8-13, worin das Dotiermittel Trägerdotiermittel umfasst, die die Morphologie von Silikat beeinflussen.

15. Das dotierte Silikat von irgendeinem der Ansprüche 8-14, worin das Trägerdotiermittel in einer Menge von höchstens 10 at% Dotiermittelmetall basierend auf Si vorhanden ist.

16. Das dotierte Silikat von irgendeinem der Ansprüche 8-15, worin die Partikeloberfläche mit organischen Gruppen zur selektiven Fixierung auf Oberflächen oder in Polymermatrizen funktionalisiert ist.

17. Polymere und/oder Polymerkomposite, die zumindest ein dotiertes Silikat von irgendeinem der Ansprüche 8-16 umfassen.

18. Polymere und/oder Polymerkomposite und/oder natürliche Fasern, die zumindest teilweise mit zumindest einem dotierten Silikat von irgendeinem der Ansprüche 8-16 behandelt oder imprägniert wurden.

19. Gewebte und/oder nicht gewebte Textilien, die Polymere und/oder Polymerkomposite und/oder natürliche Fasern von Anspruch 17 oder 18 umfassen.

20. Gewebte und/oder nicht gewebte Textilien, die zumindest teilweise mit zumindest einem dotierten Silikat von irgendeinem der Ansprüche 8-16 behandelt und/oder imprägniert wurden.

## Revendications

1. Procédé de pyrolyse au pistolet à flamme pour produire une silice dopée réalisée à la flamme (SiO₂) sous forme de particules ayant un effet antimicrobien et/ou antibactérien et/ou antifongique, dans lequel ladite silice dopée réalisée à la flamme comprend au moins un dopant fonctionnel, ledit dopant fonctionnel étant composé d'au moins un métal et/ou composé comprenant du métal à l'action antimicrobienne et/ou antibactérienne et/ou antifongique, ledit procédé comprenant les étapes consistant à :
(i) préparer une solution de précurseur comprenant au moins un précurseur de dopant fonctionnel et au moins un précurseur de silice dans un solvant organique,
(ii) vaporiser ladite solution de précurseur dans une flamme alimentée par la combustion de ladite solution de précurseur elle-même,
(iii) recueillir la silice dopée sous forme de particules.

2. Procédé selon la revendication 1, dans lequel ledit dopant fonctionnel est composé d'au moins un métal à l'action antimicrobienne et/ou antibactérienne et/ou antifongique et/ou d'au moins un oxyde métallique à l'action antimicrobienne et/ou antibactérienne et/ou antifongique.

3. Procédé selon la revendication 1 ou 2, dans lequel au moins un, de préférence tous les précurseurs de dopant fonctionnel, est/sont sélectionné(s) parmi le AgNO₃ (Nitrate d'argent), le Cu(CH₃COCHCOCH₃)₂ (acétylacétonate de cuivre), le naphthénate de cuivre et les mélanges de ceux-ci.

4. Procédé selon l'une quelconque des revendications précédentes, dans lequel le précurseur de silice est un composé contenant du silicium.

5. Procédé selon l'une quelconque des revendications précédentes, dans lequel le solvant organique est un alcool ou un mélange d'alcools.

6. Procédé selon l'une quelconque des revendications précédentes, dans lequel le dopant fonctionnel est présent dans une quantité d'au moins 2,5 % d'atomes sur base de silicium.

7. Procédé selon l'une quelconque des revendications précédentes, dans lequel le dopant comprend des dopants porteurs qui influencent la morphologie de la silice.

8. Une silice dopée sous forme de particules pouvant être obtenue par le procédé selon l'une quelconque des revendications précédentes.

9. Silice dopée sous forme de particules, ladite silice étant dopée avec au moins un dopant fonctionnel qui est sélectionné parmi un ou plusieurs métaux et/ou oxydes métalliques à l'action antimicrobienne et/ou antibactérienne et/ou antifongique, ledit dopant fonctionnel étant simultanément présent sous forme de particules incrustées, de particules à surface exposée et de particules de grande taille enrobées de silice.

10. Silice dopée selon la revendication 9, dans laquelle ledit dopant fonctionnel est sélectionné parmi le groupe composé d'argent, d'oxyde d'argent, de cuivre, d'oxyde de cuivre et de mélanges de ceux-ci.

11. Silice dopée selon la revendication 10, dans laquelle ledit dopant fonctionnel comprend de l'argent et/ou de l'oxyde d'argent.

12. Silice dopée selon la revendication 10, dans laquelle ledit dopant comprend du cuivre et/ou de l'oxyde de cuivre.

13. Silice dopée selon l'une quelconque des revendications 8 à 12, dans laquelle le dopant fonctionnel est présent dans une quantité d'au moins 2,5 % d'atomes sur base de silicium.

14. Silice dopée selon l'une quelconque des revendications 8 à 13, dans laquelle le dopant comprend des dopants porteurs qui influencent la morphologie de la silice.

15. Silice dopée selon l'une quelconque des revendications 8 à 14, dans laquelle le dopant porteur est présent dans des quantités de maximum 10 % d'atomes de métal dopant sur base de Si.

16. Silice dopée selon l'une quelconque des revendications 8 à 15, dans laquelle la surface des particules est fonctionnalisée avec des groupes organiques en vue d'une fixation sélective sur des surfaces ou à l'intérieur de matrices polymères.

17. Polymères et/ou composites polymères comprenant au moins une silice dopée selon l'une quelconque des revendications 8 à 16.

18. Polymères et/ou composites polymères et/ou fibres naturelles au moins partiellement traités ou imprégnés avec au moins une silice dopée selon l'une quelconque des revendications 8 à 16.

19. Textiles tissés et/ou non tissés comprenant des polymères et/ou composites polymères et/ou fibres naturelles selon la revendication 17 ou 18.

20. Textiles tissés et/ou non tissés au moins partiellement traités ou imprégnés avec au moins une silice dopée selon l'une quelconque des revendications 8 à 16.
